# EUROPEAN PATENT SPECIFICATION

(11) **EP 2 364 001 B1**
(45) Date of publication and mention of the grant of the patent: **29.07.2015**
(21) Application number: 10011300.0
(22) Date of filing: 19.09.2007
(51) Int. Cl.: H04M 1/2745, H04M 1/725, G06Q 10/00

(54) **Method of providing schedule information for mobile terminal**
Verfahren zur Bereitstellung von Terminplaninformationen für ein mobiles Endgerät
Procédé pour la fourniture d'informations de calendrier pour terminal mobile

(30) Priority: 20.10.2006 KR 20060102505
(43) Date of publication of application: 07.09.2011
(62) Divisional of application: 07116719.1
(73) Proprietor: Samsung Electronics Co., Ltd., Suwon-si, Gyeonggi-do, 443-742 (KR)
(72) Inventor: Kwon, Min Jeong, Suwon-si Gyeonggi-do 443-742 (KR)
(74) Representative: Grünecker Patent- und Rechtsanwälte PartG mbB

(56) References cited:
- US-A1- 2002 131 565
- US-A1- 2003 087 668
- US-A1- 2005 277 409

## Description

### BACKGROUND OF THE INVENTION

### 1. Field of the Invention

The present invention relates to a supplementary service for a mobile terminal, and in particular to a method of providing schedule information to the mobile terminal, through a call or a message to, participants by storing a list of the participants for the schedule in a schedule data.

### 2. Description of the Related Art

In general, a schedule function provided by a mobile terminal includes, for example, setting a subject item, a date item, a time item, and an alarm set item, and displaying a set schedule information when the alarm occurs.

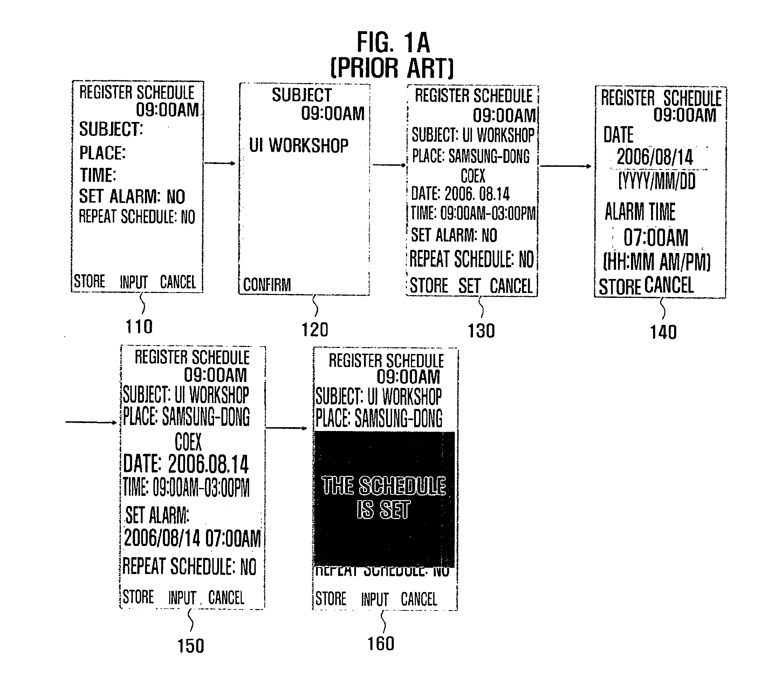

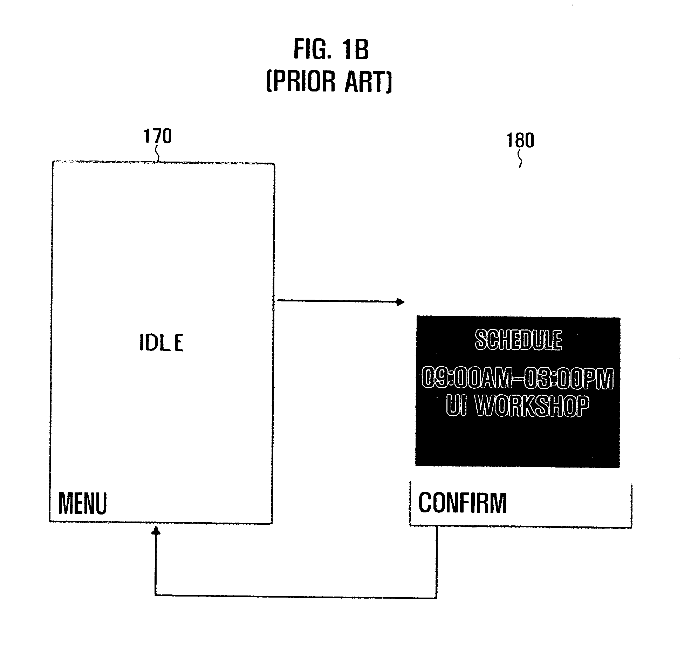

FIGs. 1A and 1B are diagrams illustrating schedule functions provided by a conventional mobile terminal.

Referring to FIG. 1A, when a user selects an event register function, the mobile terminal displays an event register screen 110. The schedule register screen 110 displays a subject item, a place item, a date item, a time item, an alarm set item, and a repeat schedule item. The user can set corresponding information to each item by selecting the item. If the user selects the subject item, a screen 120 for inputting the subject item is displayed, and the user inputs the subject item. In the same manner, the user can set a place item, a date item, and a time item. When the subject item, the place item, the date item, or the time item is set, the screen 130 displays the set items. If an alarm time is set in the screen 140, the set alarm time is displayed in the screen 150. If there is then a key input to store the set item, the screen 160 informs the user of the set event.

Referring to FIG. 1B, when the date and time reach the set alarm date and time, an displayed idle screen 170 is replaced by an screen 180 to inform the user of the set schedule in advance.

As previously described, schedule functions for the conventional mobile terminal can only confirm the subject item, the date item, and the time item for the schedule. Because a mobile terminal has no function to inform scheduled participants of a scheduled event, it is difficult for a user to induce participants to participate in the scheduled event or to inform the scheduled participants of being late for the scheduled event. It is inconvenient for the user to search a phonebook menu for calling the participants, even when the user knows a list of the scheduled participants.

Document US 2002/0131565 A1 comprises a flow chart illustrating a method for arranging and holding a telephone conference. At an appropriate time, a moderator (inviter) is notified to start a call and a scheduled status update is provided that shows the impact of delaying the call. The invitees are then notified to start the call. The moderator may cancel the call. Alternatively, the moderator may decide to move the call. If the moderator decides not to cancel and not to move, then the call is started and a list of participants is sent to all the participants.

### SUMMARY OF THE INVENTION

The present invention has been made in an effort to solve the above problems, and an object of the present invention is to provide a method of conveniently making a call or sending a message to participants of a scheduled event by making a list of the participants in advance when setting the schedule.

In accordance with an exemplary embodiment of the present invention, the above and other objects are accomplished by a method of providing scheduled event information for a mobile terminal, including setting at least one event; storing participants' information corresponding to each event; informing a user of the mobile terminal of the scheduled event by a recognizable method at a scheduled alarm time; and displaying the stored participants' information through a display unit of the mobile terminal.

### BRIEF DESCRIPTION OF THE DRAWINGS

The above and other objects, features and advantages of the present invention will be more apparent from the following detailed description in conjunction with the accompanying drawings, in which:
FIGs. 1A and 1B are block diagrams illustrating schedule functions provided by a conventional mobile terminal;
FIG. 2 is a block diagram illustrating a configuration of a mobile terminal according to an exemplary embodiment of the present invention;
FIG. 3 is a flowchart illustrating a schedule setting process in a method of providing schedule information for a mobile terminal according to another exemplary embodiment of the present invention;
FIGs. 4A through 4I are display screen examples illustrating the schedule setting process of FIG. 3;
FIG. 5 is a flowchart illustrating a process of providing set schedule information in a method of providing schedule information for a mobile terminal according to another exemplary embodiment of the present invention;
FIG. 6 is a series of display screen examples illustrating the process of providing set schedule information of FIG. 5;
FIG.7 is a flowchart illustrating another process of providing set schedule information in a method of providing schedule information for a mobile terminal according to another exemplary embodiment of the present invention; and
FIG. 8 is a series of display screen examples illustrating the process of providing set schedule information of FIG. 7.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

While the present invention may be embodied in many different forms, specific embodiments of the present invention are shown in the drawings and are described herein in detail, with the understanding that the present disclosure is to be considered as an exemplification of the principles of the invention and is not intended to limit the invention to the specific embodiment illustrated.

The following description relates to a method and apparatus for a mobile terminal using a Short Message Service according to an exemplary embodiment of the present invention.

In described embodiments, a mobile terminal is used as an example for a portable communication terminal, however, the present invention is not only limited to a mobile terminal. The portable communication terminal of the present invention is a terminal for a message transmission and reception according to a Short Message Service, and can apply to any information and communication apparatus and multi-media apparatus, such as a Digital Broadcasting Terminal, a Personal Digital Assistant,(PDA) a Smart Phone, an International Mobile Telecommunication 2000 (IMT-2000) Phone, a Wideband Code Division Multiple Access (WCDMA) Phone, and a Universal Mobile Telecommunication Service (UMTS) Phone.

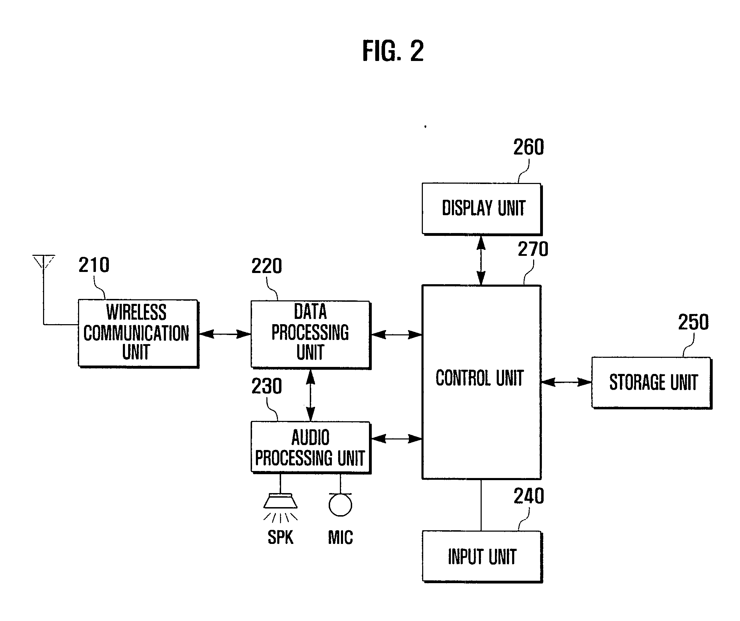

Referring to FIG. 2, a mobile terminal according to an exemplary embodiment of the present invention includes a wireless communication unit 210; a data processing unit 220; an audio processing unit 230; an input unit 240; a storage unit 250; a display unit 260; and a control unit 270.

The wireless communication unit 210 performs wireless communication with other mobile terminals by transmitting and receiving signals. The wireless communication unit 210 includes a Radio Frequency (RF) transmitting unit to up-convert a frequency of a signal being transmitted and amplifies the signal, and an RF receiving unit to down-convert the frequency and low-noise amplify a received signal.

The data processing unit 220 processes voice data from the audio processing unit 230, numbers and character data input by a user through the input unit 240, and data delivered from the wireless communication unit 210.

The data processing unit 220 includes a transmitting unit (not shown) to encode and modulate signals to be transmitted through the wireless communication unit 210, and a receiving unit to demodulate and decode received signals. The data processing unit also 220 includes a modem and a codec (not shown). The codec includes a data codec to process packet data and an audio codec to process audio signals such as a voice.

The audio processing unit 230 reproduces audio signals output from the data processing unit 220 and outputs audio signals, such as voice, input from a microphone MIC to the data processing unit 220.

The audio processing unit 230 outputs voice and sound data, transformed according to control of the control unit 270 into audible sounds, through a speaker SPK, and transforms audio signals, such as voice, received from a microphone MIC into data.

The input unit 240 receives numbers or character information and includes input keys and function keys to set different types of functions. The function keys include a direction key to perform special functions, a side key, and a shortcut key. The input unit 240 outputs user input key signals related to controlling of functions for the mobile terminal to the control unit 270.

The storage unit 250 stores the required applications for function operations, downloaded content, and user data. The storage unit 250 includes an application, for example, for more than one buffer to temporarily store a user's data while executing a text message application. The storage unit 250 includes a program area and a data area. The program area stores an operating system for the mobile terminal and an application for a schedule function. When of activating a function according to the user's request, the control unit 270 provides the functions through a relevant application stored in the storage unit 250. The data area stores data according to mobile terminal usage, and stores participants' phone numbers according to a schedule in connection with phone book data.

The display unit 260 visually provides a mobile terminal menu, data input by a user, a function set information and other information for the user. The display unit 260 may include a Liquid Crystal Display. If the Liquid Crystal Display is used as a touch screen, the display unit 260 can additionally provide an input function.

The control unit 270 controls the overall operations of the mobile terminal and signal flows between internal blocks of the mobile terminal. The control unit 270 controls signal flows between the data processing unit 220, input unit 240, storage unit 250, and display unit 260. The control unit 270 may include the data processing unit 220.

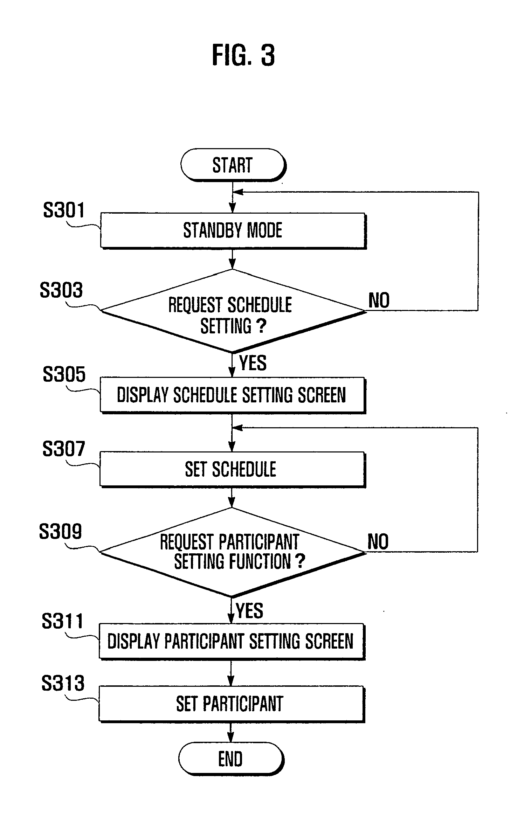

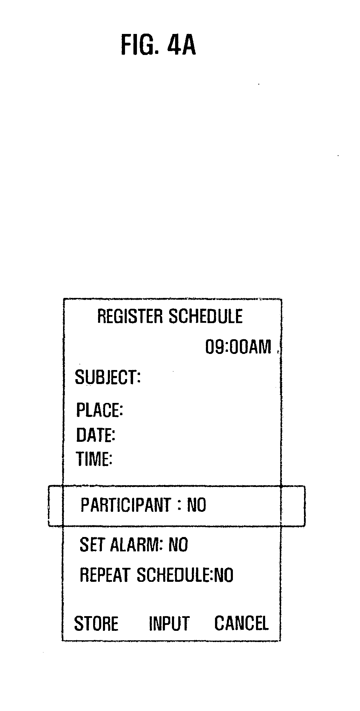

FIG. 3 is a flowchart illustrating a schedule setting process in a method of providing schedule information for a mobile terminal according to an exemplary embodiment of the present invention. FIGS. 4A through 4I are display screen examples illustrating the schedule setting of FIG. 3.

Referring to FIG. 3, when the mobile terminal is in a standby mode, in Step S301, if the control unit 270 detects a key input requesting the schedule setting function, in Step S303, the control unit 270 displays a schedule setting screen through the display unit 260, in Step S305, as shown in FIG. 4A. The schedule setting screen displays a subject item, a place item, a date item, a time item, a participant item, an alarm set item, and a repeat schedule item.

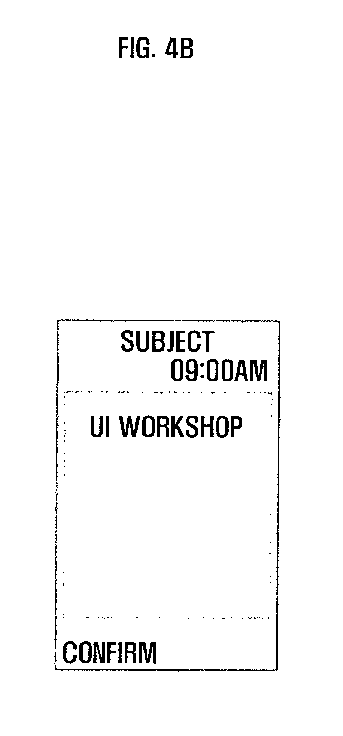

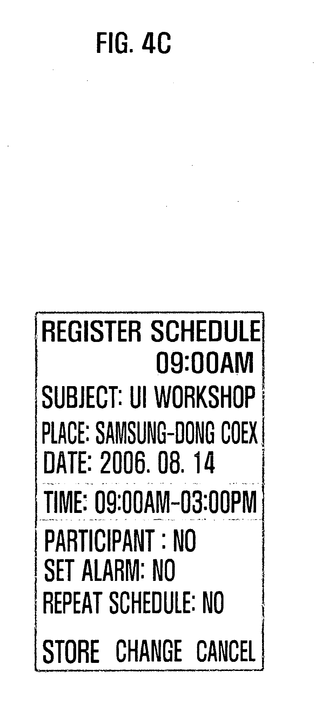

Next, setting items are set and stored, in Step S307. A user can set a schedule by selecting an item. If the user selects one of the subject item, the place item, the date item, the time item, the alarm set item, and the repeat schedule item, the control unit 270 displays the corresponding setting screen for each item through the display unit 260. The user can set contents according to the item in the provided screen. For example, if the user selects the subject item, the control unit 270 enables the user to input the subject by displaying a subject-setting screen, as shown in FIG. 4B. When the user sets a content of a selected item, the control unit 270 stores the set content and displays the set content on the schedule-setting screen, as shown in FIG. 4C. As illustrated by the screen in FIG. 4C, after the user confirms a set content, the user can set contents of other items by selecting another item, or changing the set content of another item.

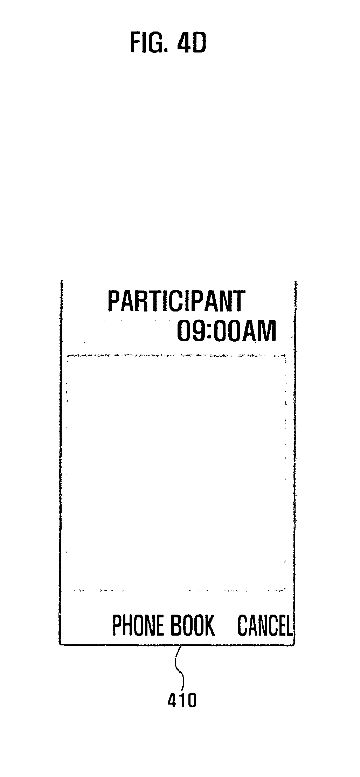

As shown in FIG. 4D, if the control unit 270 detects a user key input to request a function for setting participants according to a relevant event, in Step S309, the control unit 270 displays the participant setting screen through the display unit 260, in Step S311, as shown in FIG. 4D. The user then sets the participants, in Step S313, by selecting the participants from a phone book data displayed through the participant setting screen or by directly inputting participants' phone numbers.

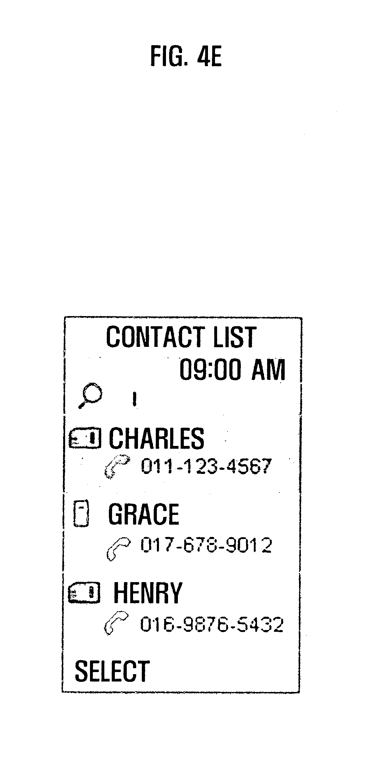

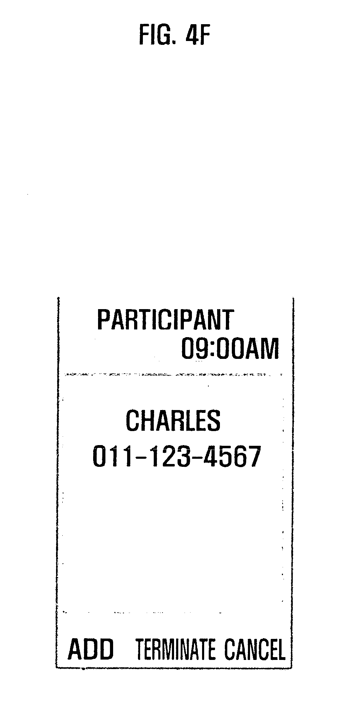

If a user selects a phone book input option 410, as shown in FIG.4D to set participants by selecting the phone book data, the control unit 270 displays the phone book data through the display unit 260, as shown in FIG. 4E. If data of a displayed phone book is selected, the control unit 270 detects and displays a screen with a selected participant phone book data in the participant setting screen, as shown in FIG. 4F.

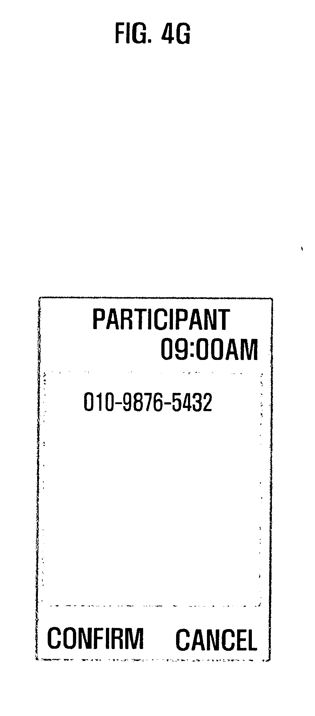

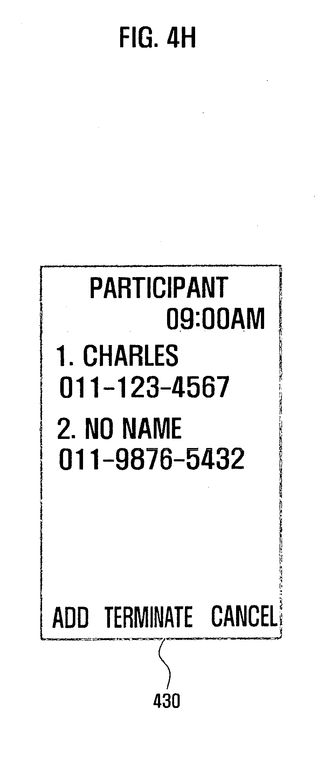

If the user directly inputs a phone number in a participant setting screen, as shown in FIG. 4G, the control unit 270, through the display unit 260, displays a screen with a participant's phone number inputted directly in the participant setting screen, as shown in FIG. 4H. If a participant name corresponding to the phone number is not displayed, the participant name can be input by the user.

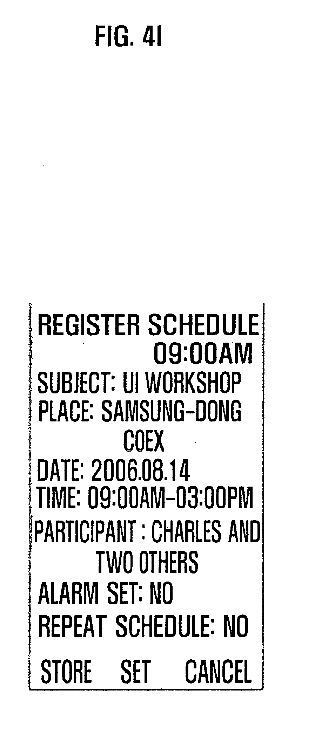

When the user selects a terminate option 430 (as shown in FIG. 4H) after setting the participants, the control unit 270 displays the completed schedule setting screen, as shown in FIG. 4I, and stores the participant information selected by the user. The participant information includes the participant name and phone number. The user can determine the selected participant information through the screen shown in FIG. 4I. As described above, the participants can be set and stored.

Hereafter, a process of providing a set schedule and schedule information using set participant information is described. The process is described separately for a case of one set participant and for a case of more than one set participant.

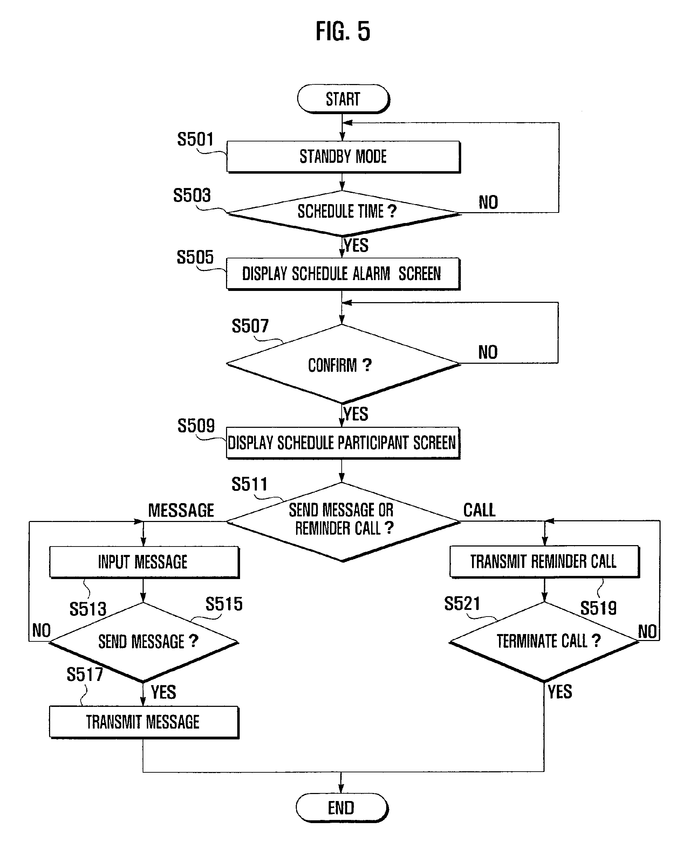

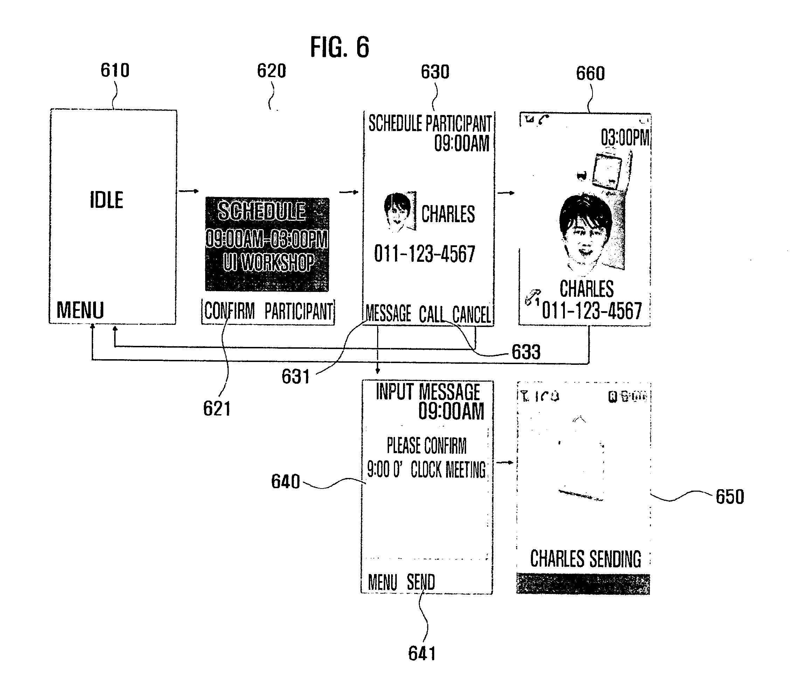

The process of providing set schedule information in the case of one participant is described as follows. FIG.5 is a flowchart illustrating a process of providing set schedule information in providing schedule information for a mobile terminal according to an exemplary embodiment of the present invention. FIG. 6 is a series of display screen examples illustrating the process of providing set schedule information of FIG. 5.

Referring to FIGs. 5 and 6, when a control unit 270, through a display unit 260, displays an idle screen 610 in a standby mode, in Step S501, if the control unit 270 determines that a current time is equal to a set alarm time, in Step S503, the control unit 270 informs a user of an event by outputting an alarm and by displaying set schedule information on a schedule alarm screen 620, in Step S505. The alarm can be any recognizable method for a user, such as a sound, a voice, or a vibration.

If the user selects a confirm input option 621 in the schedule alarm screen 620, in Step S507, the control unit 270 displays a schedule participant screen 630 through the display unit 260, in Step S509.

The user can send a message or a reminder call to a displayed phone number by selecting a message input option 631 or a reminder call input option 633 in the schedule participant screen 630, in Step S511.

If the user selects the message input option 631, the control unit 270 displays a message input screen 640 for input of a message by the user, in Step S513. When the control unit 270 detects user selection of a send option 641 in the message input screen 640, in Step S515, the control unit 270 transmits the message to the displayed phone number, in Step S517 and displays a sending confirmation screen 650.

If the user selects the reminder call input option 633 at Step S511, the control unit 270 sends a reminder call to the relevant participant phone number (e.g. 011-123-4567 in FIG. 6) and displays a sending screen 660, in Step S519. When the user ends the call, the control unit 270 terminates the call, in Step S521.

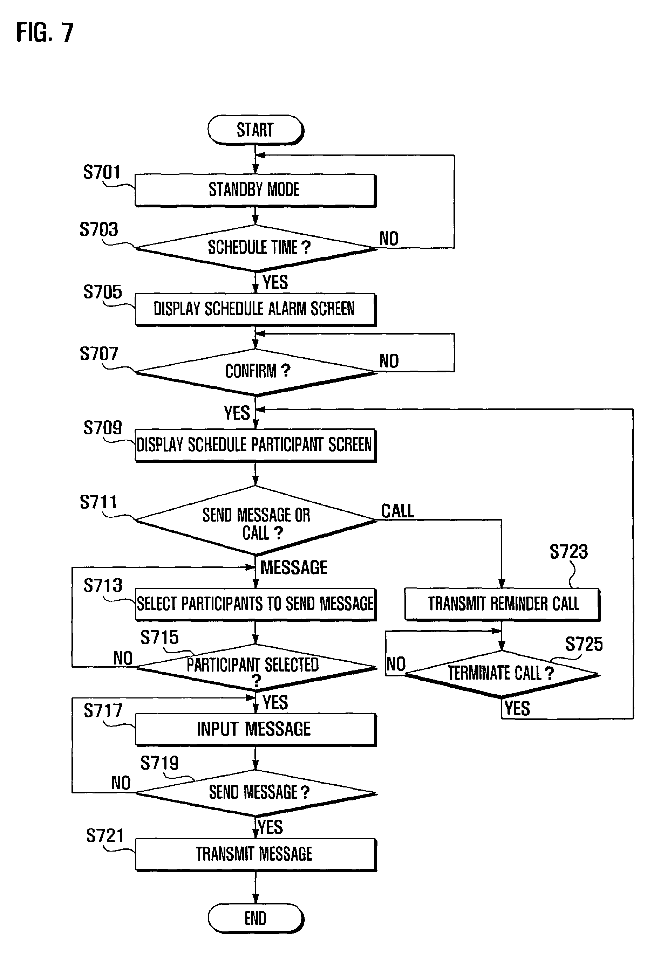

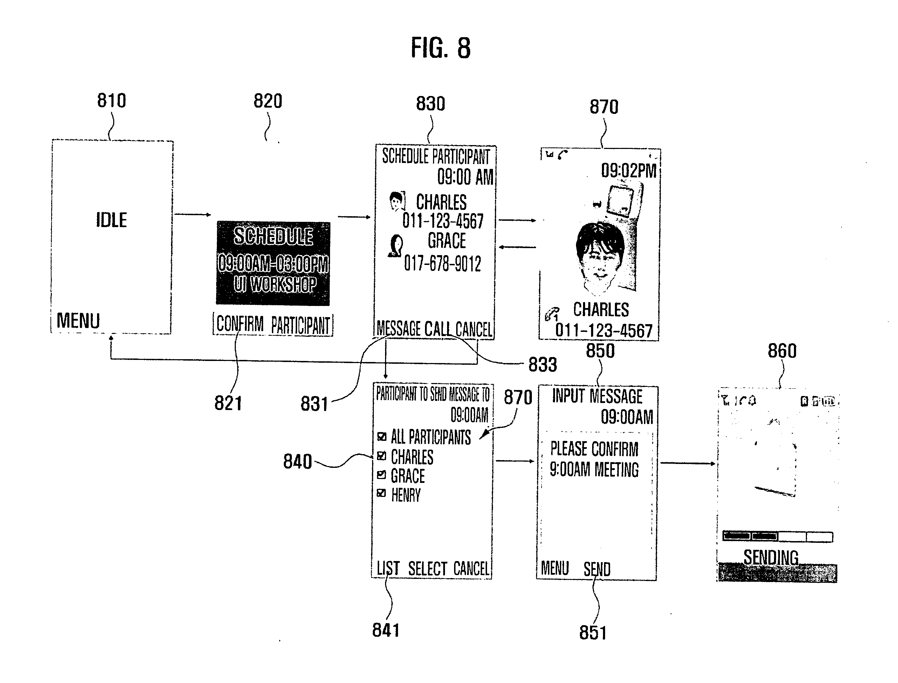

The process of providing set schedule information in the case of more than one set participant is described as follows. FIG. 7 is a flowchart illustrating a process of providing set schedule information for a mobile terminal according to an exemplary embodiment of the present invention. FIG. 8 is a series of display screen examples illustrating the process of providing set schedule information of FIG. 7.

Referring to FIGs. 7 and 8, when a control unit 270, through a display unit 260, displays an idle screen 810 in a standby mode, in Step S701, if the control unit 270 determines that the current time is equal to a set alarm time, in Step S703, the control unit 270 informs the user of an event by outputting an alarm and by displaying set schedule content on a schedule alarm screen 820, in Step S705.

If the user selects a confirm input option 821 in the schedule alarm screen 820, in Step S707, the control unit 270 displays a schedule participant screen 830 through the display unit 260, in Step S709. The user selects a message input option 831 or a reminder call input option 833 in the schedule participant screen 830 to send a message or a reminder call to a relevant phone number, in Step S711.

If the message input option 831 is selected, the control unit 270 displays a message sending participant screen 840, from which the user selects participants to whom an information message is to be sent, in Step S713. The message sending participant screen 840 is a participant list for the set schedule. The user can send the information message to selected participants to inform of the event by selecting the participants from the participant list, or an information message can be sent to all the participants by selecting all the participants in the message sending participant screen 840. Therefore, the user can easily induce selected participants to participate in the event. When the participants are selected from the participant list, the user selects a message input option 841, and the control unit 270 displays a message input screen 850 for composing a message by the user, in Step S717. When the control unit 270 detects user selection of a send option 851 in the message input screen 850, in Step S719, the control unit 270 transmits the message to the phone number of each selected participant, in Step S721 and displays a sending confirmation screen 860.

If the user selects the reminder call input option 833 at Step S711, the control unit 270 sends a reminder call to a phone number of a participant selected from those displayed in the schedule participant screen 830, and displays a sending screen 870, in Step S723. For example, as shown in the schedule participant screen 830, if the user selects a participant "Charles" and selects the reminder call input option 833, a reminder call is sent to Charles's phone number "011-123-4567". When the user terminates the call, the control unit 270 returns to Step S709 and displays the schedule participant screen 830 to enable the user to select another participant and send another reminder call. According to the exemplary embodiment of the present invention, participants according to a schedule can be conveniently contacted by previously storing the participants' contact numbers. Therefore, participant management according to the schedule increases user convenience.

Although exemplary embodiments of the present invention have been described in detail hereinabove, it should be clearly understood that many variations and modifications of the basic inventive concepts herein taught which may appear to those skilled in the present art will still fall within the scope of the present invention, as defined in the appended claims.

Particularly, according to the described exemplary embodiments of the present invention, contact is made with the participants by sending a call or a message, however, the participants may also be contacted by using other functions provided by a mobile terminal.

As described above, according to a method of providing schedule information for a mobile terminal of the present invention, it is convenient for a user to induce participants through sending a message or calling to the participants by making a participant list in advance when setting the schedule.

## Claims

1. A method of providing schedule information for a mobile terminal, comprising:
setting at least one event (307);
storing participants' information (313) corresponding to each event in the case of more than one participant;
at a scheduled alarm time (703), performing the steps of:
informing a user of the mobile terminal of the event (705);
displaying the stored participants' information (709) through a display unit of the mobile terminal; and
**characterized in that**
at the scheduled alarm time, the method comprises further performing the steps of:
selecting a message input option or a reminder call input option,
if the message input option is selected, selecting participants to whom an information message is to be sent (713), or
if the reminder call option is selected, selecting a participant for sending a reminder call (723), and, when the user terminates the call, displaying the stored participants (709) to enable the user to select another participant and send another reminder call.

2. The method of claim 1, further comprising:
selecting at least one of displayed participants' information; and
transmitting a message to contact addresses according to selected participant information.

3. The method of claim 1, further comprising:
selecting at least one of the displayed participants' information; and
transmitting a reminder call to contact addresses according to selected participants' information.

4. The method of claim 1, wherein the event comprises at least one of a subject, a place, a date, a time and an alarm set item.

5. The method of claim 1, wherein storing participants' information corresponding to each event stores the participants' information of at least one participant.

6. The method of claim 1, wherein the user of the mobile terminal is informed of the event by at least one of a sound, a voice, an alarm, and a vibration.

7. The method of claim 1, wherein displaying the stored participants' information displays the stored participants' information for all participants according to the event.

## Patentansprüche

1. Verfahren zum Bereitstellen von Terminplaninformation für ein mobiles Endgerät, umfassend:
Einstellen wenigstens eines Ereignisses (307);
Speichern von Information (313) von Beteiligten entsprechend jedem Ereignis für den Fall von mehr als einem Beteiligten;
zu einer terminplangerechten Alarmzeit (703) erfolgendes Durchführen der nachfolgenden Schritte:
Informieren eines Anwenders des mobilen Endgerätes über das Ereignis (705);
Anzeigen der gespeicherten Information (709) der Beteiligten durch eine Anzeigeeinheit des mobilen Endgerätes;
**dadurch gekennzeichnet, dass**
zu der terminplangerechten Alarmzeit das Verfahren des Weiteren ein Durchführen der nachfolgenden Schritte umfasst:
Auswählen einer Mitteilungseingabeoption oder einer Erinnerungsruf- bzw. Anrufeingabeoption,
dann, wenn die Mitteilungseingabeoption ausgewählt ist, erfolgendes Auswählen von Beteiligten, denen eine Informationsmitteilung gesendet werden soll (713), oder
dann, wenn die Erinnerungsruf- bzw. Anrufoption ausgewählt ist, erfolgendes Auswählen eines Beteiligten zum Senden eines Erinnerungsrufes bzw. -anrufes (723) und dann, wenn der Anwender den Ruf bzw. Anruf beendet, erfolgendes Anzeigen der gespeicherten Beteiligten (709), um dem Anwender zu ermöglichen, einen weiteren Beteiligten auszuwählen und einen weiteren Erinnerungsruf bzw. -anruf zu senden.

2. Verfahren nach Anspruch 1, des Weiteren umfassend:
Auswählen wenigstens einer von der angezeigten Information der Beteiligten; und
Übertragen einer Mitteilung an Kontaktadressen entsprechend der ausgewählten Information des Beteiligten.

3. Verfahren nach Anspruch 1, des Weiteren umfassend:
Auswählen wenigstens einer von der angezeigten Information der Beteiligten; und
Übertragen eines Erinnerungsrufes bzw. -anrufes an Kontaktadressen entsprechend der ausgewählten Information des Beteiligten.

4. Verfahren nach Anspruch 1, wobei das Ereignis wenigstens eines von einem Thema-, einem Ort-, einem Datum-, einem Zeit- und einem Alarmeinstellobjekt umfasst.

5. Verfahren nach Anspruch 1, wobei das Speichern von Information der Beteiligten entsprechend jedem Ereignis die Information der Beteiligten wenigstens eines Beteiligten speichert.

6. Verfahren nach Anspruch 1, wobei der Anwender des mobilen Endgerätes über das Ereignis durch wenigstens eines von einem Ton, einer Stimme, einem Alarm und einer Vibration informiert wird.

7. Verfahren nach Anspruch 1, wobei das Anzeigen der gespeicherten Information der Beteiligten die gespeicherte Information der Beteiligten für alle Beteiligten entsprechend dem Ereignis anzeigt.

## Revendications

1. Procédé pour la fourniture d'information de calendrier pour un terminal mobile, comprenant les étapes consistant à :
fixer au moins un événement (307) ;
stocker l'information des participants (313) correspondant à chaque événement dans le cas de plus d'un participant ;
à une heure d'alarme prévue (703), exécuter les étapes consistant à :
informer un utilisateur du terminal mobile de l'événement (705) ;
donner à visualiser l'information des participants stockée (709) par l'intermédiaire d'une unité de visualisation du terminal mobile ; et
**caractérisé en ce que**
à l'heure d'alarme prévue, le procédé comprend en outre l'exécution des étapes consistant à :
sélectionner une option d'entrée de message ou une option d'entrée d'appel de rappel,
si l'option d'entrée de message est sélectionnée, sélectionner les participants auxquels un message d'information doit être envoyé (713), ou
si l'option d'appel de rappel est sélectionnée, sélectionner un participant pour envoyer un appel de rappel (723) et, lorsque l'utilisateur termine l'appel, donner à visualiser les participants stockés (709) pour permettre à l'utilisateur de sélectionner un autre participant et envoyer un autre appel de rappel.

2. Procédé selon la revendication 1, comprenant en outre :
la sélection d'au moins une de l'information des participants donnée à visualiser ; et
la transmission d'un message à des adresses de contact selon l'information du participant sélectionnée.

3. Procédé selon la revendication 1, comprenant en outre :
la sélection d'au moins une de l'information des participants donnée à visualiser ; et
la transmission d'un appel de rappel à des adresses de contact selon l'information du participant sélectionnée.

4. Procédé selon la revendication 1, dans lequel l'événement comprend au moins un élément parmi un sujet, un endroit, une date, une heure et une alarme.

5. Procédé selon la revendication 1, dans lequel le stockage de l'information des participants correspondant à chaque événement stocke l'information des participants d'au moins un participant.

6. Procédé selon la revendication 1, dans lequel l'utilisateur du terminal mobile est informé de l'événement par au moins un moyen parmi un son, une voix, une alarme et une vibration.

7. Procédé selon la revendication 1, dans lequel le fait de donner à visualiser l'information des participants stockée permet de visualiser l'information des participants stockée pour tous les participants selon l'événement.
